# EUROPEAN PATENT APPLICATION

(11) **EP 2 037 308 A1**
(43) Date of publication of application: **18.03.2009**
(21) Application number: 07743640.0
(22) Date of filing: 18.05.2007
(51) Int. Cl.: G02B 15/167, G02B 21/06

(54) **ZOOM MICROSCOPE**

(30) Priority: 22.05.2006 JP 2006141198
(71) Applicant: Nikon Corporation, Tokyo 100-8331 (JP)
(72) Inventor: SUZUKI, Fumio, Tokyo 100-8331 (JP)
(74) Representative: Viering, Jentschura & Partner
(86) International application number: PCT/JP2007/060205
(87) International publication number: WO 2007/135976

(57) **Abstract**

A zoom microscope includes: an observation optical system (3) having an exchangeable objective lens (31), an aperture diaphragm (32), an afocal zoom system (33), and an image forming optical system (34); and a zoom epi-illumination optical system (1). The zoom epi-illumination optical system (1) has an optical path which is also the optical path of the observation optical system (3) between the objective lens (31) and the afocal zoom system (33) so as to illuminate an object by incident light. In the zoom epi-illumination optical system (1), an image of a light source (11) is formed in the vicinity of the pupil position of the objective lens (31). This realizes a zoom microscope capable of performing fluorescent epi-illumination without shading in all the magnification ranges.

## Description

### Technical field

The present invention relates to a zoom microscope.

### Background Art

Conventionally, as disclosed in Patent Documents 1 to 4, there are known zoom microscopes which illuminate an object through an objective lens. In the zoom microscope disclosed in Patent Document 1, an object is illuminated through an objective lens and an observation variable-power optical system. Each of the zoom microscopes disclosed in Patent Documents 1 to 4 includes an illumination optical system which is independent of an observation variable-power optical system, and an object is illuminated through an objective lens.
Patent Document 1: Japan Kokai Patent Document No. 11-231227
Patent Document 2: Japan Kokai Patent Document No. 9-274141
Patent Document 3: Japan Kokai Patent Document No. 2001-516071
Patent Document 4: Japan Kokai Patent Document No. 2005-157335

However, in the zoom microscope disclosed in Patent Document 1, because during fluorescence observation, illumination light which is excitation light, passes through the observation variable-power optical system, a problem arises that self-fluorescence generated in the observation variable-power optical system becomes a noise.

In the zoom microscopes discloses in Patent Documents 2 to 4, because the observation optical system and the illumination optical system are separately provided, self-fluorescence generated in the illumination optical system does not enter the observation optical system. However, because illumination light is incident to the objective lens at a certain angle with respect to the optical axis of the observation optical system, the object is undesirably illuminated with the illumination light in an oblique direction with respect to an observation direction.

In order to solve the problems, the inventor made an invention of a zoom microscope and filed Japanese Patent Application No. 2004-344039 (referred to as 'prior application', which has not yet been publicly known on the date of filing of the present application). In the zoom microscope described in the prior application, the illumination optical system is formed independently of the observation optical system, a dichroic mirror is disposed between the objective lens and the observation optical system, and an optical path of illumination light and an optical path of the imaging optical system are combined to perform epi-illumination of the object. However, in the zoom microscope described in the prior application, a pupil position (position of a variable aperture stop) of the illumination optical system becomes far from the objective lens, and shading of the illumination light may be generated particularly in a lower magnification range.

In view of the foregoing, the object of the present invention is to provide a zoom microscope which can perform the fluorescent epi-illumination without shading in all the magnification ranges.

### Disclosure of the Invention

According to a first aspect of the present invention, a zoom microscope includes an observation optical system including an exchangeable objective lens, an aperture stop, an afocal zoom system, and an imaging optical system, and a zoom epi-illumination optical system. An optical path of the zoom epi-illumination optical system and an optical path of the observation optical system are combined between the objective lens and the afocal zoom system to perform epi-illumination of an object. A light source image is formed in the vicinity of a pupil position of the objective lens in the zoom epi-illumination optical system.

In the aspect of the present invention, the light source image is formed in the vicinity of the pupil position of the objective lens in the zoom epi-illumination optical system. Therefore, fluorescent epi-illumination can be performed without shading in all the magnification ranges.

In the zoom microscope according to a second aspect of the present invention, the zoom epi-illumination optical system includes a collector lens which collects a light flux from a light source, a zoom optical system which has an aperture stop disposed in the vicinity of a conjugate position of the light source, and a relay optical system which forms an image of the aperture stop image in the vicinity of the pupil position of the objective lens.

Because the zoom optical system includes the aperture stop disposed in the vicinity of the conjugate position of the light source, an area of illuminated region can be changed by varying a magnification of the zoom optical system. Generally, when a zoom microscope is used with higher magnification, higher illumination intensity is required while an illuminated area is decreased. On the contrary, when a zoom microscope is used with lower magnification, a wider illuminated area is required while illumination intensity becomes lower. The zoom microscope according to the aspect of the present invention can meet the needs because an area of illuminated region can be changed.

The zoom microscope according a third aspect of the present invention further includes an observation aperture stop which works with a power-varying operation of the afocal zoom system, wherein the aperture stop in the zoom optical system is a variable aperture stop which works with the observation aperture stop.

Observation magnification is varied according to a magnification of the afocal zoom system. NA of the observation optical system is preferably increased to increase illumination intensity when high-magnification observation is performed, and NA of the observation optical system is preferably decreased to deepen a focal depth when low-magnification observation is performed. Therefore, an observation aperture stop which works with a power-varying operation of the afocal zoom system should preferably be provided. NA of the aperture stop in the zoom optical system should preferably be increased to increase illumination intensity in the case where the observation optical system has a large NA, and NA of the aperture stop in the zoom optical system should preferably be decreased to deepen a focal depth of the illumination in the case where the observation optical system has a small NA. The zoom microscope according to the aspect of the present invention can meet the needs because the aperture stop in the zoom optical system is a variable aperture stop which works with the observation aperture stop.

As used herein, "the aperture stop in the zoom optical system works with the observation aperture stop" shall mean not only that the observation aperture stop is opened and closed by working directly with opening and closing motions of the aperture stop in the zoom optical system, but also that both the aperture stop in the zoom optical system and the observation aperture stop are opened and closed by working with a power-varying operation of the afocal zoom system.

The present invention can provide a zoom microscope which can perform fluorescent epi-illumination without shading in all the magnification ranges.

### Brief Description of the Drawings

Fig. 1 is a view showing a schematic configuration of a zoom microscope according to an embodiment of the present invention.
Fig. 2 is a view showing an example of alignment of a lens system in a zoom epi-illumination optical system of Fig. 1.

### Explanations of Letters or Numerals

- 1: zoom illumination optical system
- 2: filter block
- 3: zoom observation optical system
- 11: fiber light source
- 12: collector lens
- 13: field stop
- 14: folding mirror
- 15: zoom optical system
- 16: variable aperture stop
- 17: relay optical system
- 18: folding mirror
- 21: excitation filter
- 22: dichroic mirror
- 23: barrier filter
- 31: objective lens
- 32: variable aperture stop
- 33: afocal zoom system
- 34: imaging optical system
- G1: first lens group
- G2: second lens group
- G3: third lens group
- G4: fourth lens group
- GZ: variable-power optical system
- GL: relay optical system
- GL1: lens group
- GL2: lens group
- FB: light source
- GC: collector lens group, collector lens
- FS: field stop
- AS: variable aperture stop
- O: object plane
- I: image plane

### Best Mode for Carrying Out the Invention

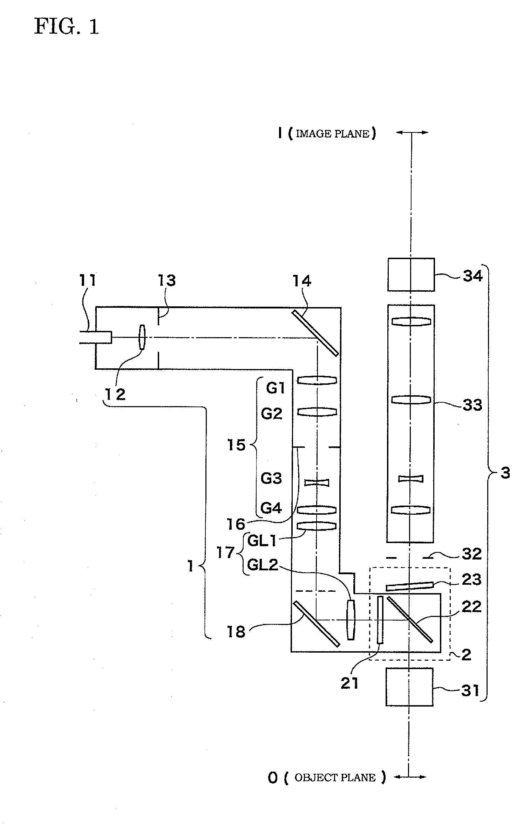

An exemplary embodiment of a zoom microscope of the present invention will be described below with reference to the drawings. Fig. 1 is a view showing a schematic configuration of a zoom microscope according to an embodiment of the present invention. In the embodiment, an objective lens 31, a dichroic mirror 22, a barrier filter 23, a variable aperture stop 32, an afocal zoom system 33, and an imaging optical system 34 are disposed in the order described above from the object side as main components which constitute a zoom observation optical system 3.

On the other hand, in an illumination optical system, light flux emitted from a fiber light source 11 is collected by a collector lens 12. The light flux passes through a field stop 13, and an optical path of the light flux is deflected by folding mirrors 14 and 18. The light flux passes through a zoom optical system 15 and a relay optical system 17, and only the light having a band of wavelengths necessary for excitation is transmitted through an excitation filter 21 of a filter block 2. Then, the light is reflected on the dichroic mirror 22, so that the light is aligned with an optical axis of the zoom observation optical system 3, and the light is introduced to the objective lens 31 to illuminate an object. The illumination optical system is referred to as zoom epi-illumination optical system 1. The dichroic mirror 22 is shared with the zoom observation optical system 3. The objective lens 31 is also used in both the illumination and the observation.

Fluorescent light is generated from the object illuminated with the excitation light according to the wavelength of the excitation light, and the fluorescent light forms an image on an image plane by the zoom observation optical system 3. Meanwhile, only the fluorescent light is transmitted through the dichroic mirror 22 and barrier filter 23 in the filter block 2.

In the present embodiment, the excitation light is transmitted through only the objective lens 31 in the zoom observation optical system 3, while the excitation light is not transmitted through the afocal zoom system 33 and the imaging optical system 34. Therefore, self-fluorescence which will be generated by the excitation light and which will become a noise, is minimized in the zoom observation optical system 3, which allows fluorescence observation with good contrast.

The zoom optical system 15 includes a first lens group G1 having positive refractive power, a second lens group G2 having positive refractive power, a variable aperture stop 16, a third lens group G3 having negative refractive power, and a fourth lens group G4 having positive refractive power, arranged in the order described above from the light source side. A power is varied by moving the second lens group G2 and the third lens group G3 in an optical axis direction, while the first lens group G1 and fourth lens group G4 are fixed when the power is being varied. Desirably, the zoom optical system 15 varies its power as the afocal zoom system 33 varies its power.

In the present embodiment, a light source image is formed in the vicinity of the variable aperture stop 16 of the zoom optical system 15 by the collector lens 12 and the first lens group G1 and second lens group G2 of the zoom optical system 15. The light source image is formed again in the vicinity of a pupil position of the objective lens 31 by the third lens group G3 and fourth lens group G4 of the zoom optical system 15 and the relay optical system 17 (formed by lens groups GL1 and GL2), so that the object is illuminated. Therefore, fluorescent epi-illumination can be performed without shading in all the magnification ranges of the zoom observation optical system.

Desirably the variable aperture stop 16 works with the variable aperture stop 32, which works with the afocal zoom system 33, and a variable power of the zoom optical system 15 to change a diameter of the aperture such that NA of the zoom observation optical system 3 is substantially equal to NA of the zoom illumination optical system 1.

### Example

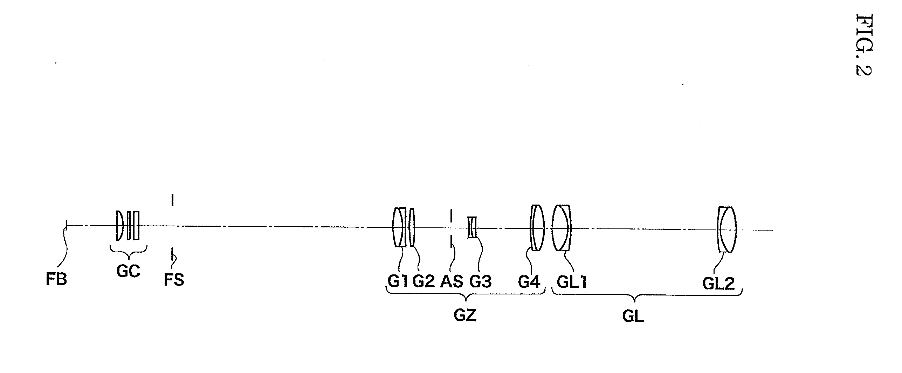

Fig. 2 shows an example of an arrangement of the lens system in the zoom epi-illumination optical system of Fig. 1. In Fig. 2, the folding mirrors are omitted, and the lenses are linearly disposed. The lens system includes a collector lens group GC (corresponding to the collector lens 12 of Fig. 1), a field stop FS (corresponding to the field stop 13 of Fig. 1), a variable-power optical system GZ (corresponding to the zoom optical system 15 of Fig. 1), and a relay optical system GL (corresponding to the relay optical system 17 of Fig. 1), arranged in the order described above from the side of the light source FB,. The collector lens group GC includes a planoconvex lens whose plane portion is oriented toward the side of the light source FB, an ultraviolet cut filter, and an infrared cut filter. The variable-power optical system GZ includes a first lens group G1 (corresponding to the first lens group G1 of Fig. 1) formed by a cemented lens of a biconvex lens and a biconcave lens, a second lens group G2 (corresponding to the second lens group G2 of Fig. 1) formed by a biconvex lens, a variable aperture stop AS (corresponding to the variable aperture stop 16 of Fig. 1), a third lens group G3 (corresponding to the third lens group G3 of Fig. 1) formed by a cemented lens of a biconcave lens and a positive meniscus lens whose convex surface portion is oriented toward the light source side, and a fourth lens group G4 (corresponding to the fourth lens group G4 of Fig. 1) formed by a cemented lens of a negative meniscus lens whose convex surface portion is oriented toward the light source side and a biconvex lens. The relay optical system GL includes GL1 (corresponding to the lens group GL1 of Fig. 1) formed by a cemented lens of a biconvex lens and a negative meniscus lens whose concave surface portion is oriented toward the light source side and GL2 (corresponding to the lens group GL2 of Fig. 1) which is identical with GL1 except that the orientation is reversed.

When a power of the zoom observation optical system 3 of Fig. 1 is varied from a lower power end to a high power end, with varying power of the zoom observation optical system 3, the third lens group G3 is moved toward the light source side, and the second lens group G2 is moved so as to correct focal shift caused by the movement of the third lens group G3. The collector lens group GC, the first lens group G1, the fourth lens group G4, and the relay optical system GL are fixed while the power is being varied.

The variable aperture stop AS is placed between the second lens group G2 and the third lens group G3, and a diameter of the aperture is varied such that NA of the lens system is substantially equal to NA of the zoom observation optical system 3 of Fig. 1.

Table 1 shows specifications of the lens system. In Table 1, Fai designates a diameter of the aperture of the variable aperture stop, fc designates a focal length of the collector lens, fz designates a composite focal length of the variable-power optical system and the relay optical system when an infinite light flux is incident from the objective lens side, and M designates magnification of the observation optical system which works with the variable-power optical system. A plane number designates a number of a lens plane counted from the light source side, r designates a curvature radius of the lens plane, d designates a lens plane interval, n designates a refractive index of a d line (587 nm), ν indicates Abbe number, FB designates an exit plane of a fiber light source, FS designates a field stop, AS designates a variable aperture stop, and PL designates a lens-barrel abutting surface. In all the embodiments, the same elements are designated by the same letters or numerals. In the present example, the exit plane of the fiber light source has an inner diameter of 3 mm.

**[Table 1]**

| | | | | | | |
|---|---|---|---|---|---|---|
| fc = 32 | | | | | | |
| fz = 50∼400 | | | | | | |

| Plane number | r | | d | | v | n |
|---|---|---|---|---|---|---|
| 1 | FB | | 32.0000 | | | 1. 000000 |
| 2 | 0.0000 | | 4.0000 | | 70.41 | 1.487490 |
| 3 | -15.6020 | | 2.5000 | | | 1. 000000 |
| 4 | 0.0000 | | 1. 0000 | | 58.80 | 1.522160 |
| 5 | 0.0000 | | 2.5000 | | | 1. 000000 |
| 6 | 0.0000 | | 3.0000 | | 58.80 | 1. 522160 |
| 7 | 0.0000 | | 20.0000 | | | 1. 000000 |
| 8 | FS | | 134.6182 | | | 1. 000000 |
| 9 | 39.3356 | | 6.0000 | | 60. 14 | 1. 620409 |
| 10 | -28.1931 | | 1. 5000 | | 42. 72 | 1. 834810 |
| 11 | 227.9748 | | d1 | | | 1.000000 |
| | | | | | | |
| 12 | 78.4536 | | 3.0000 | | 57.36 | 1. 670000 |
| 13 | -78.4536 | | d2 | | | 1.000000 |
| | | | | | | |
| 14 | AS | | d3 | | | 1.000000 |
| | | | | | | |
| 15 | -22.2876 | | 1. 0000 | | 42. 72 | 1.834810 |
| 16 | 16.9885 | | 2.5000 | | 36.27 | 1. 620040 |
| 17 | 61.9354 | | d4 | | | 1.000000 |
| | | | | | | |
| 18 | 82.1351 | | 1. 5000 | | 42. 72 | 1. 834810 |
| 19 | 43.2178 | | 6.5000 | | 70.41 | 1. 487490 |
| 20 | -39.5950 | | 5.0000 | | | 1. 000000 |
| 21 | 36.8462 | | 9.5000 | | 57.03 | 1.622801 |
| 22 | -19.1321 | | 1. 5000 | | 32.17 | 1. 672700 |
| 23 | -109.6607 | | 88.8000 | | | 1. 000000 |
| 24 | 109.6607 | | 1. 5000 | | 32.17 | 1.672700 |
| 25 | 19. 1321 | | 9.5000 | | 57.03 | 1.622801 |
| 26 | -36.8462 | | 55.0000 | | | 1. 000000 |
| 27 | PL | | | | | 1. 000000 |

| | Fai | 15.9000 | | 8.1000 | | 6.5000 |
|---|---|---|---|---|---|---|
| | M | 1. 0000 | | 3.0000 | | 8.0000 |
| | d1 | 21. 7343 | | 2.6127 | | 22.6280 |
| | d2 | 3.3949 | | 22.5164 | | 2.5011 |
| | d3 | 42.3452 | | 11.1251 | | 2.5039 |
| | d4 | 2.5152 | | 33. 7353 | | 42.3565 |

## Claims

1. A zoom microscope including:
an observation optical system comprising
an exchangeable objective lens,
an aperture stop,
an afocal zoom system, and
an imaging optical system; and
a zoom epi-illumination optical system,
**characterized in that** an optical path of said zoom epi-illumination optical system and an optical path of said observation optical system are combined between said objective lens and said afocal zoom system to perform epi-illumination of an object, and **in that**
a light source image is formed in the vicinity of a pupil position of said objective lens in said zoom epi-illumination optical system.

2. The zoom microscope according to claim 1, wherein said zoom epi-illumination optical system includes:
a collector lens which collects a light flux from a light source;
a zoom optical system which has an aperture stop disposed in the vicinity of a conjugate position of said light source; and
a relay optical system which forms an image of said aperture stop in the vicinity of said pupil position of said objective lens.

3. The zoom microscope according to claim 2, further comprising an observation aperture stop which works with a power-varying operation of said afocal zoom system,
wherein said aperture stop in said zoom optical system is a variable aperture stop which works with said observation aperture stop.
